# EUROPEAN PATENT APPLICATION

(11) **EP 4 516 969 A1**
(43) Date of publication of application: **05.03.2025**
(21) Application number: 22940007.2
(22) Date of filing: 30.12.2022
(51) Int. Cl.: C25B 15/02, C25B 9/70, C25B 9/65

(54) **NEW ENERGY HYDROGEN PRODUCTION SYSTEM AND CONTROL METHOD THEREFOR**

(30) Priority: 29.04.2022 CN 202210467711
(71) Applicant: Sungrow Hydrogen Sci.&Tech. Co., Ltd., Hefei 230088, Anhui (CN)
(72) Inventor: LI, Jiangsong, Hefei, Anhui 230088 (CN); SUN, Longlin, Hefei, Anhui 230088 (CN); BAI, Yang, Hefei, Anhui 230088 (CN); CHEN, Zhiquan, Hefei, Anhui 230088 (CN)
(74) Representative: Zacco Norway AS
(86) International application number: PCT/CN2022/144049
(87) International publication number: WO 2023/207201

(57) **Abstract**

The present application provides a new energy hydrogen production system and a control method therefor. In the new energy hydrogen production system, a new energy input module supplies power to electrolytic cells by means of a power conversion module; and a control system of the new energy hydrogen production system is used for controlling, according to the power of the new energy input module, the power conversion module to work, such that among N electrolytic cells in an operation state, at least N-1 electrolytic cells work in a preset load range. The preset load range is a corresponding load range having the highest system efficiency in an electrolytic cell working range division result prestored in the control system, i.e., the present application can enable as many electrolytic cells as possible to respectively work in the preset load range having the highest system efficiency, and therefore, the system efficiency is improved and is optimized to the extent possible.

## Description

The present application claims priority to Chinese Patent Application No.202210467711.4, titled "NEW ENERGY HYDROGEN PRODUCTION SYSTEM AND CONTROL METHOD THEREFOR", filed on April 29, 2022 with the China National Intellectual Property Administration, which is incorporated herein by reference in its entirety.

### FIELD

The present disclosure relates to the technical field of hydrogen production from renewable energy, and in particular to a hydrogen production system from renewable energy and a method for controlling the hydrogen production system from renewable energy.

### BACKGROUND

Hydrogen production from renewable energy is crucial to achieve double carbon goals in the future. Large-scale hydrogen production from renewable energy is widely used as a demand for hydrogen energy increases and cost of electricity per kWh from renewable energy decreases continually. In a scenario of large-scale hydrogen production, how to control a system to achieve an optimal efficiency of the system, and further to achieve optimal cost of hydrogen production is currently the focus of the research.

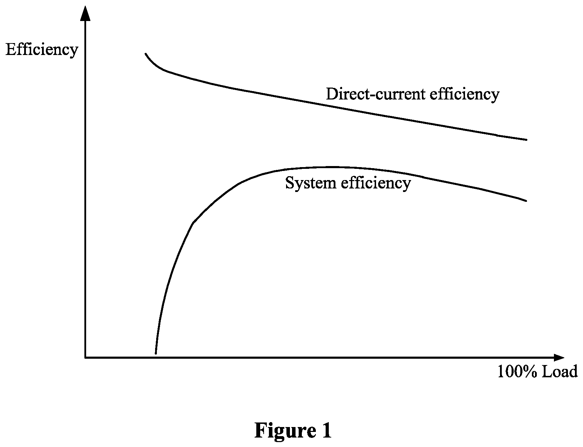

Figure 1 illustrates a hydrogen production efficiency curve of a hydrogen production system from renewable energy, where a direct-current energy consumption of an electrolyzer increases as a load of the electrolyzer increases. Therefore, the electrolyzer at light load has minimum energy consumption, maximum direct-current efficiency, and produces a small amount of hydrogen. In addition, in such case, public engineering devices accounts for a large proportion in entire energy consumption, and thus the system has low efficiency.

In the scenario of large-scale hydrogen production, if all electrolyzers operate at the lightest load, the device utilization rate is low and the cost of hydrogen production is high. Therefore, according to the conventional technology, after an electrolyzer operates at a rated load, another electrolyzer is started, which causes a low efficiency of the electrolyzer, resulting in high marginal cost of hydrogen production and low efficiency of the system.

### SUMMARY

According to the present disclosure, a hydrogen production system from renewable energy and a method for controlling a hydrogen production system from renewable energy are provided to improve the efficiency of the system.

In order to achieve the above objectives, the following technical solutions are provided according to the present disclosure.

In a first aspect of the present disclosure, a hydrogen production system from renewable energy is provided. The hydrogen production system includes a control system, a renewable energy input module, a power conversion module and at least two electrolyzers. The renewable energy input module is configured to supply power to each of the at least two electrolyzers through the power conversion module. The control system is configured to control, based on a power of the renewable energy input module, the power conversion module to operate where at least N-1 of N electrolyzers in an operating state operate within a preset load range, N is a positive integer, and the preset load range is a load range corresponding to a highest efficiency of the hydrogen production system in a division result of an electrolyzer operation range pre-stored in the control system.

In an embodiment, the control system is further configured to increase with a priority a power of the electrolyzer operating in a low load range if the power of the renewable energy input module increases; and reduce with a priority a power of the electrolyzer operating in a high load range if the power of the renewable energy input module decreases.

In an embodiment, the control system is further configured to control the at least two electrolyzers to share a power fluctuation of the renewable energy input module if the power fluctuation is greater than an acceptable power fluctuation limit of one of the at least two electrolyzers.

In an embodiment, for controlling the at least two electrolyzers to share a power fluctuation, the control system is configured to control the electrolyzers in the operating state to share the power fluctuation in an equal distribution manner or in a weighted distribution manner.

In an embodiment, the division result of the electrolyzer operation range includes at least two load ranges.

In an embodiment, the at least two load ranges in the division result of the electrolyzer operation range includes a first load range from 0% to 30% of a rated load, a second load range from 30% to 50% of the rated load, a third load range from 50% to 80% of the rated load, and a fourth load range from 80% to 100% of the rated load, where the third load range is the preset load range.

In an embodiment, the power conversion module includes at least two power converters, input terminals of the at least two power converters are connected to output terminals of the renewable energy input module in one-to-one correspondence; and output terminals of the at least two power converters are connected to the at least two electrolyzers in one-to-one correspondence.

In an embodiment, the control system includes first controller for the at least two power converters and second controller for the at least two electrolyzers. The first controllers are communicatively connected to the second controllers in one-to-one correspondence. The first controllers are communicatively connected to each other, one of the first controllers serves as a communication master, and the communication master is configured to generate power commands for the at least two power converters and send the power commands to the respective first controllers.

In an embodiment, the control system includes a system controller, first controllers for the at least two power converters and second controllers for the at least two electrolyzers. The first controllers are communicatively connected to the second controllers in one-to-one correspondence; the first controllers are communicatively connected to the system controller; and the system controller is configured to generate power commands for the at least two power converters and send the power commands to the respective first controllers.

In a second aspect of the present disclosure, a method for controlling a hydrogen production system from renewable energy is further provided, which is applied to the control system in the hydrogen production system from renewable energy according to any one of the first aspect described above. The method includes: gradually controlling the at least two electrolyzers to operate within the preset load range based on the power of the renewable energy input module in the hydrogen production system from renewable energy if the hydrogen production system from renewable energy is started, until the at least two electrolyzers are in the operating state; and gradually reducing load ranges of the at least two electrolyzers based on the power of the renewable energy input module if the hydrogen production system from renewable energy is stopped, until the at least two electrolyzers are stopped.

In an embodiment, the gradually controlling the at least two electrolyzers to operate within the preset load range includes: controlling a current electrolyzer to operate within the preset load range and controlling a next electrolyzer to follow a power fluctuation of the renewable energy input module if the current electrolyzer fails to accommodate the power of the renewable energy input module as the power of the renewable energy input module increases.

In an embodiment, the gradually reducing load ranges of the at least two electrolyzers until the at least two electrolyzers are stopped includes: controlling a current electrolyzer to be on standby and controlling a next electrolyzer to follow a power fluctuation of the renewable energy input module, if the current electrolyzer fails to maintain in the operating state as the power of the renewable energy input module decreases.

In an embodiment, the gradually reducing load ranges of the at least two electrolyzers until the at least two electrolyzers are stopped includes: controlling one of the at least two electrolyzers to be on standby and controlling the other operating electrolyzers to share the power of the renewable energy input module if a power of each of the at least two electrolyzers equally distributed from the power of the renewable energy input module decreases to a preset load-shedding power as the power of the renewable energy input module decreases, until the at least two electrolyzers fail to maintain in the operating state.

In an embodiment, the method for controlling the hydrogen production system from renewable energy further includes: determining whether a power fluctuation of the renewable energy input module is greater than an acceptable power fluctuation limit of the single electrolyzer if the power of the renewable energy input module fluctuates; controlling at least two of the at least two electrolyzers to share the power fluctuation in a case that it is determined that the power fluctuation of the renewable energy input module is greater than the acceptable power fluctuation limit of the single electrolyzer; and increasing with a priority a power of an electrolyzer operating in a low load range if the power of the renewable energy input module increases; and reducing with a priority a power of an electrolyzer operating in a high load range if the power of the renewable energy input module decreases, in a case that it is determined that the power fluctuation of the renewable energy input module is less than or equal to the acceptable power fluctuation limit of the single electrolyzer.

In the hydrogen production system from renewable energy according to the present disclosure, the renewable energy input module supplies power to each electrolyzer through the power conversion module, the control system is configured to control the power conversion module to operate based on the power of the renewable energy input module, so that at least N-1 of N electrolyzers in the operating state operate within the preset load range, and the preset load range is a load range corresponding to a highest efficiency of the hydrogen production system in the division result of the electrolyzer operation range pre-stored in the control system. That is, according to the present disclosure, as many electrolyzers as possible are controlled to operate within the preset load range corresponding to the highest efficiency of the system, thereby improving the efficiency of the system and achieving the optimal efficiency of the system.

### BRIEF DESCRIPTION OF THE DRAWINGS

For more clearly illustrating embodiments of the present disclosure or the technical solutions in the conventional technology, drawings to be used in the description of the embodiments or the conventional technology are briefly described hereinafter. Apparently, the drawings in the following description are only some embodiments of the present disclosure. For those skilled in the art, other drawings may be obtained based on the provided drawings without any creative work.
Figure 1 is a schematic diagram illustrating a hydrogen production efficiency curve of a hydrogen production system from renewable energy according to the conventional technology;
Figure 2 is a schematic structural diagram illustrating a hydrogen production system from renewable energy according to an embodiment of the present disclosure;
Figure 3 is a schematic diagram illustrating a division result of an electrolyzer operation range according to an embodiment of the present disclosure;
Figure 4 is a flowchart illustrating a method for controlling a hydrogen production system from renewable energy according to an embodiment of the present disclosure;
Figure 5 is a flowchart illustrating a method for controlling a hydrogen production system from renewable energy according to another embodiment of the present disclosure;
Figure 6 is a flowchart illustrating a control strategy for starting a hydrogen production system from renewable energy according to an embodiment of the present disclosure; and
Figure 7 is a schematic diagram illustrating switching between operation ranges of an electrolyzer according to an embodiment of the present disclosure.

### DETAILED DESCRIPTION

Technical solutions of embodiments of the present disclosure are clearly and completely described hereinafter in conjunction with the drawings of the embodiments of the present disclosure. Apparently, the embodiments described in the following are only some embodiments of the present disclosure, rather than all embodiments. Any other embodiments obtained by those skilled in the art based on the embodiments in the present disclosure without any creative work fall in the scope of protection of the present disclosure.

In this specification, terms "include", "comprise" or any other variants are intended to be non-exclusive. Therefore, a process, method, article or device including a series of elements includes not only the elements but also other elements that are not enumerated, or further include the elements inherent for the process, method, article or device. Unless expressively limited otherwise, a process, method, article or device limited by "comprising/including a(n) ..." does not exclude existence of another identical element in such process, method, article or device.

A hydrogen production system from renewable energy is provided according to the present disclosure to improve the efficiency of the system.

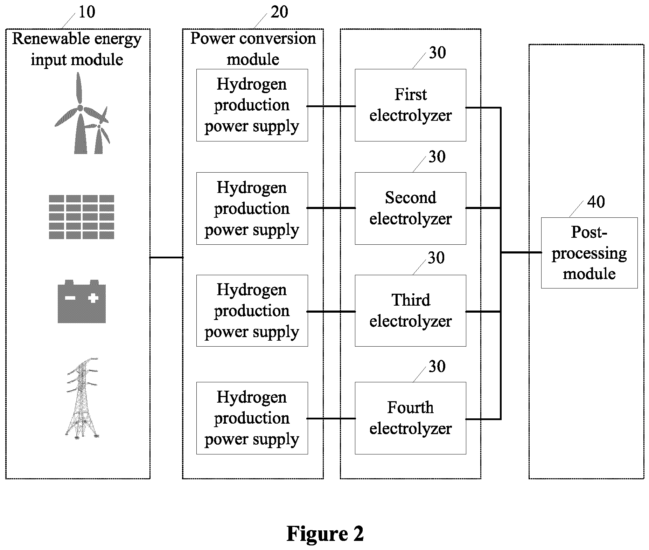

Referring to Figure 2, the hydrogen production system from renewable energy includes a control system (not shown in Figure 2), a renewable energy input module 10, a power conversion module 20 and at least two electrolyzers 30.

The renewable energy input module 10 is configured to supply power to each of the at least two electrolyzers 30 through the power conversion module 20. In practice, the hydrogen production system from renewable energy further includes a post-processing module 40. For a large-scale hydrogen production system, the system may be in a structure, in which multiple electrolyzers sharing post-processing and purification. Figure 2 illustrates that four electrolyzers 30 share the same post-processing module 40, where, the renewable energy input module 10 may be from any combination of four energy sources including wind energy, solar energy, stored energy and energy from power grid. The four energy sources may output in parallel through a corresponding conversion device, or may output separately. The power conversion module 20 mainly includes at least two power converters. Input terminals of the at least two power converters are connected to output terminals of the renewable energy input module 10 in one-to-one correspondence. Specifically, the input terminals of the power converters may be connected to output terminals of different energy sources, or may be connected in parallel to a same output terminal of the renewable energy input module 10. Each power converter serves as a hydrogen production power supply for the corresponding electrolyzer 30, and converts received power into power adapted to the electrolyzer 30. The power converter may be an AC/DC converter and/or a DC/DC converter, and may perform single-stage conversion or multi-stage conversion, depending on a specific application scenario. All implementations fall within the protection scope of the present disclosure. The electrolyzer 30 may be an alkaline electrolyzer, a proton exchange membrane electrolyzer, a solid oxide electrolyzer or the like, which is not limited herein and depends on the application environment. The hydrogen and oxygen produced by various electrolyzers 30 are collected into the post-processing module 40 for gas-liquid separation and purification together.

For the hydrogen production system, the electrolyzers 30 differ in compositional structure and the public engineering devices differ in composition, and thus a best efficiency point of the system is not exactly acquired. Therefore, as shown in Figure 1, both he efficiency (the direct-current efficiency in the Figure 1) of the electrolyzer 30 and the efficiency of the system vary with a load of the electrolyzer 30. In this embodiment, an operation range of the electrolyzer 30 is divided into at least two load ranges in advance. The number of the load ranges is not limited, as long as at least one load range corresponding to the highest efficiency of the hydrogen production system is determined. For example, a load range is from 50% to 80% of a rated load, the above best efficiency point of the system is achieved within the load range, and the load range is defined as a preset load range.

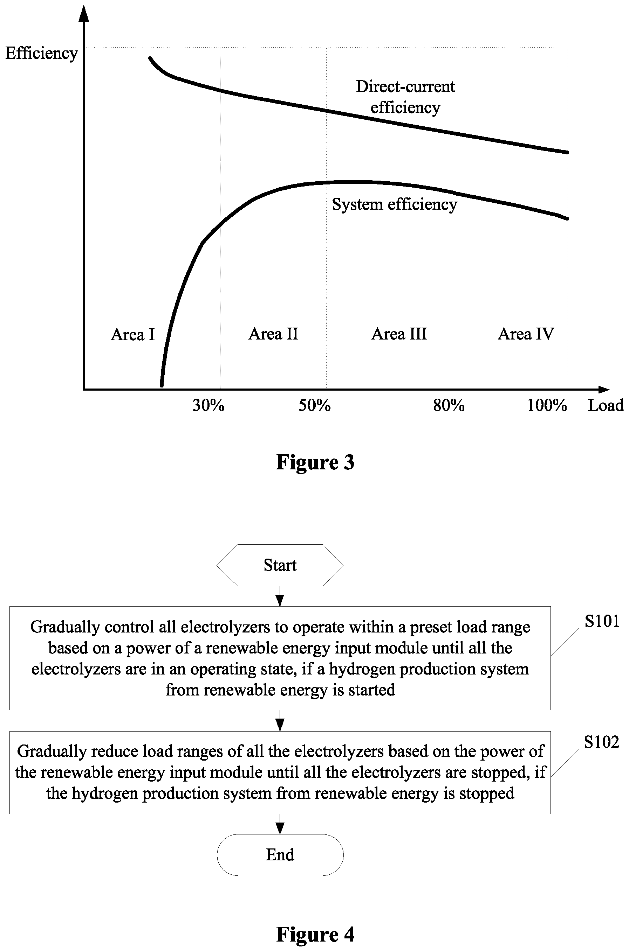

In practice, the operation range of the electrolyzer is divided into at least two load ranges. For example, referring to Figure 3, the operation range is divided into four load ranges including a first load range (that is, an area I in Figure 3) from 0% to 30% of the rated load, a second load range (that is, an area II in Figure 3) from 30% to 50% of the rated load, a third load range (that is, an area III in Figure 3) from 50% to 80% of the rated load, and a fourth load range (that is, an area IV in Figure 3) from 80% to 100% of the rated load. The third load range is the preset load range. The division of the operation range is an example, and is not limited to the division result of the four load ranges shown in Figure 3, depending on the application environment. All implementations fall within the protection scope of the present disclosure.

A division result of the electrolyzer operation range is pre-stored in the control system, so that the control system can control, based on the power of the renewable energy input module 10, the power conversion module 20 to operate, such as gradually controlling the electrolyzer 30 to operate or stopping the electrolyzer 30. As a result, N electrolyzers 30 maintain in the operating state after gradually controlling the electrolyzer 30 to operate or stopping the electrolyzer 30, at least N-1 of the N electrolyzers 30 in the operating state operate within the preset load range, and the remaining electrolyzer 30 is to ensure a total power for hydrogen production in accordance with the power supplied by the renewable energy input module 10. The power of the remaining electrolyzer 30 is a remaining part of the power supplied by renewable energy input module 10 except the power of other electrolyzers 30. In practice, the power of each of other electrolyzers 30 varies within the preset load range, and the power of the remaining electrolyzer 30 is adjusted to be within the preset load range as much as possible. In other words, in this embodiment, as many electrolyzers 30 as possible are controlled to operate within the preset load range, in order to ensure the optimal efficiency of the system.

In the hydrogen production system from renewable energy according to the embodiment, based on the above principle, as many electrolyzers 30 as possible are controlled to operate within the preset load range corresponding to the highest efficiency of the system, thereby improving the efficiency of the system and achieving the optimal efficiency of the system.

In practice, the control system at least includes first controllers for the power converters and second controllers for the electrolyzers 30. The first controllers are communicatively connected to the second controllers in one-to-one correspondence, the first controllers are communicatively connected to each other. One of the first controllers serves as a communication master. The communication master is configured to generate power commands for the power converters based on the power supplied by the renewable energy input module 10, and send the power commands to the respective first controllers, so as to control the powers of the respective electrolyzers 30.

In an embodiment, the control system may further include a system controller. The first controllers for the power converters are communicatively connected to the second controllers for the electrolyzers 30. The first controllers are communicatively connected to the system controller. The system controller is configured to generate power commands for the power converters, and send the power commands to the respective first controllers to control the powers of the respective electrolyzers 30.

The structure of the control system may depend on the application environment, as long as the control system can improve the efficiency of the system described above. All implementations fall within the protection scope of the present disclosure.

It should be noted that, for water electrolysis, a concentration of oxygen in hydrogen or hydrogen in oxygen is unqualified at low power due to an influence of a diaphragm characteristic of water electrolysis, and thus is not adapted to a power fluctuation of the renewable energy. In a case that the power of the renewable energy fluctuates to a lower limit of the alkaline electrolyzer, the alkaline electrolyzer fails to operate for a long period and thus is stopped after operating for a time period. Therefore, the electrolyzers may be frequently started and stopped in hydrogen production by water electrolysis, and frequent start and stop of the electrolyzers affect the service life and the energy efficiency of the electrolyzer, thus reducing the economy of the system.

Therefore, based on the above embodiment, in an embodiment, the control system in the hydrogen production system from renewable energy is further configured to: increase with a priority a power of the electrolyzer 30 operating in a low load range if a power of the renewable energy input module 10 increases; and reduce with a priority a power of the electrolyzer 30 operating in a high load range if a power of the renewable energy input module 10 decreases.

In order to adapt to the power fluctuation of the renewable energy, for large-scale hydrogen production, in the strategy of gradual starting and stopping based on the division result of the electrolyzer operation range according to the embodiment, an electrolyzer 30 with strong ability to withstand a power fluctuation is first controlled to withstand the power fluctuation of the renewable energy input module 10 based on the above principle, so that all the electrolyzers 30 can be started and stopped smoothly if an overall power of the renewable energy fluctuates, and the number of times of starting and stopping the electrolyzers 30 can be reduced.

If the renewable energy has a large power fluctuation, and the single electrolyzer 30 fails to withstand the fluctuation, the control system is further configured to control at least two electrolyzers 30 to share the power fluctuation if the power fluctuation of the renewable energy input module 10 is greater than an acceptable power fluctuation limit of the single electrolyzer 30. For example, the control system controls electrolyzers 30 currently in the operating state to share the power fluctuation. In practice, the control system controls the electrolyzers 30 to share the power fluctuation in an equal distribution manner or in a weighted distribution manner.

In other words, if the power fluctuation of the renewable energy is greater than the acceptable power fluctuation limit of the single electrolyzer 30, multiple electrolyzers 30 may be controlled to share the power fluctuation, in order to adapt to the power fluctuation of the renewable energy, achieving a stable power change of the single electrolyzer and preventing the operating state of the single electrolyzer from greatly changing.

In practice, if the overall power of the renewable energy fluctuates, the number of times of starting and stopping the electrolyzer 30 is minimized in order to avoid a large change in the operation range of the single electrolyzer 30. In such case, a smooth power fluctuation is required. Therefore, a fixed threshold Pn1 may be set instead of calculating the acceptable power fluctuation limit of the single electrolyzer 30 with the strongest ability to withstand a power fluctuation in real time. In a case that the power fluctuation ΔP of the renewable energy exceeds the threshold Pn1, it is determined that the single electrolyzer fails to withstand the power fluctuation inputted to the system, where ΔP=|P(t)-P(t-1)|, P(t) represents a power of the renewable energy input module 10 at a current time instant t, P(t-1) represents a power of the renewable energy input module 10 at a previous time instant (t-1). In this case, it is determined that electrolyzers 30 currently in the operating state share the power fluctuation, and the sharing may be performed in the equal distribution manner or in the weighted distribution manner. In a case that the power fluctuation ΔP of the renewable energy is less than or equal to the threshold Pn1, it is determined that the single electrolyzer can withstand the power fluctuation inputted to the system, and the power fluctuation is withstood by the single electrolyzer 30. The increased power is withstood by an electrolyzer 30 operating in the low load range, and the decreased power is withstood by an electrolyzer 30 operating in the high load range. The threshold Pn1 may be determined based on the power fluctuation limit of the electrolyzer, which is not limited herein.

In the scenario of large-scale hydrogen production, the cost of the hydrogen production of a system is closely related to an operation mode of the system. How the electrolyzers 30 operate together, how to start and stop the electrolyzers 30, and how to achieve the optimal efficiency of the system are mainly considered in a case of a power fluctuation of the renewable energy.

In the solution of hydrogen production from renewable energy according to the conventional technology, after a current electrolyzer operates at a rated load, a next electrolyzer is started, and thus there is a problem that the electrolyzers 30 are frequently started and stopped and the overall efficiency of the system is not considered. As a result, the system does not operate in an optimal operating state, and the frequent start and stop affect the service life and performance of the electrolyzers.

A method for controlling a hydrogen production system from renewable energy is provided according to an embodiment, which is applied to the control system in the hydrogen production system from renewable energy according to any one of the above embodiments described above. The structure and principle of the hydrogen production system from renewable energy may be referred to the above embodiments, which are not repeated herein.

As shown in Figure 4, the method for controlling the hydrogen production system from renewable energy includes the following steps S101 to S102.

In step S101, if the hydrogen production system from renewable energy is started, all the electrolyzers are gradually controlled to operate within the preset load range based on the power of the renewable energy input module until all the electrolyzers are in the operating state.

The step of gradually controlling all the electrolyzers to operate within the preset load range includes: controlling a current electrolyzer to operate within the preset load range and controlling a next electrolyzer to follow the power fluctuation of the renewable energy input module, if the current electrolyzer fails to accommodate the power of the renewable energy input module as the power of the renewable energy input module increases.

In step S102, if the hydrogen production system from renewable energy is stopped, load ranges of all the electrolyzers are gradually reduced based on the power of the renewable energy input module until all the electrolyzers are stopped.

The step of gradually reducing load ranges of all the electrolyzers until all the electrolyzers are stopped includes: controlling a current electrolyzer to be on standby and controlling a next electrolyzer to follow the power fluctuation of the renewable energy input module, if the current electrolyzer fails to maintain in the operating state as the power of the renewable energy input module decreases.

In practice, the step of gradually reducing load ranges of all the electrolyzers until the all the electrolyzers are stopped includes: controlling one of the electrolyzers to be on standby and controlling the other operating electrolyzers to share the power of the renewable energy input module if a power of each of all the electrolyzers equally distributed from the power of the renewable energy input module decreases to a preset load-shedding power as the power of the renewable energy input module decreases, until all the electrolyzers fail to maintain in the operating state. In practice, the sharing may be performed in the equal distribution manner or in the weighted distribution manner, depending on the specific application environment.

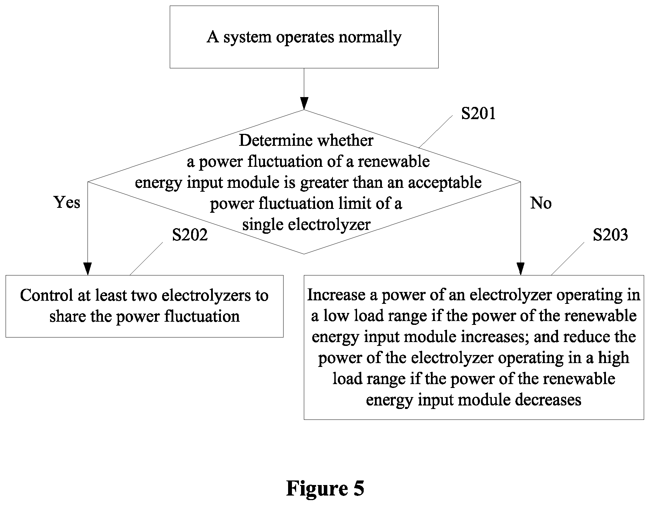

Moreover, the power of the renewable energy input module may fluctuate at any time instant. Figure 5 illustrates an example that the hydrogen production system operates normally. The method for controlling the hydrogen production system from renewable energy further includes the following steps S201 to S203.

In step S201, if the power of the renewable energy input module fluctuates, it is determined whether a power fluctuation of the renewable energy input module is greater than an acceptable power fluctuation limit of the single electrolyzer.

In a case that it is determined that the power fluctuation of the renewable energy input module is greater than the acceptable power fluctuation limit of the single electrolyzer, step S202 is performed. In a case that it is determined that the power fluctuation of the renewable energy input module is less than or equal to the acceptable power fluctuation limit of the single electrolyzer, step S203 is performed.

In step S202, at least two electrolyzers are controlled to share the power fluctuation.

In step S203, a power of an electrolyzer operating in a low load range is increased with a priority if the power of the renewable energy input module increases; and a power of an electrolyzer operating in a high load range is reduced with a priority if the power of the renewable energy input module decreases.

Since the electrolyzers differ in structure and the public engineering devices differ in composition, the system operating in the load range from 50% to 80% of the rated load usually has the highest efficiency. Generally, a power limit is required for the PEM electrolyzer and the alkaline electrolyzer. For example, if the power of alkaline electrolyzer is less than 30% of a rated power, a purity of hydrogen or oxygen is unqualified. Therefore, an area below the power limit is defined as an area I. For example, as shown in Figure 3, an operation range of an alkaline hydrogen production system may be divided into four ranges including a first load range (that is, an area I) from 0% to 30% of a rated load, a second load range (that is, an area II) from 30% to 50% of the rated load, a third load range (that is, an area III) from 50% to 80% of the rated load, and a fourth load range (that is, an area IV) from 80% to 100% of the rated load, where the third load range is the preset load range. In addition, a state in which the electrolyzer operates is divided into three states of an operating state, an off state and a standby state. The electrolyzer in the standby state does not produce hydrogen, a temperature of lye in the electrolyzer is greater than a preset temperature, and the corresponding auxiliary system is started to operate, such as an air compressor, a pure water machine and other public engineering devices. The preset temperature is determined according to the actual situation. That is, a state in the area I is defined as the standby state, and a state in the areas II, III or IV is defined as the operating state. Moreover, the area III is defined as the preset load range, and the preset load-shedding power may be set to be in the area II, such as the power corresponding to 40% of the rate load.

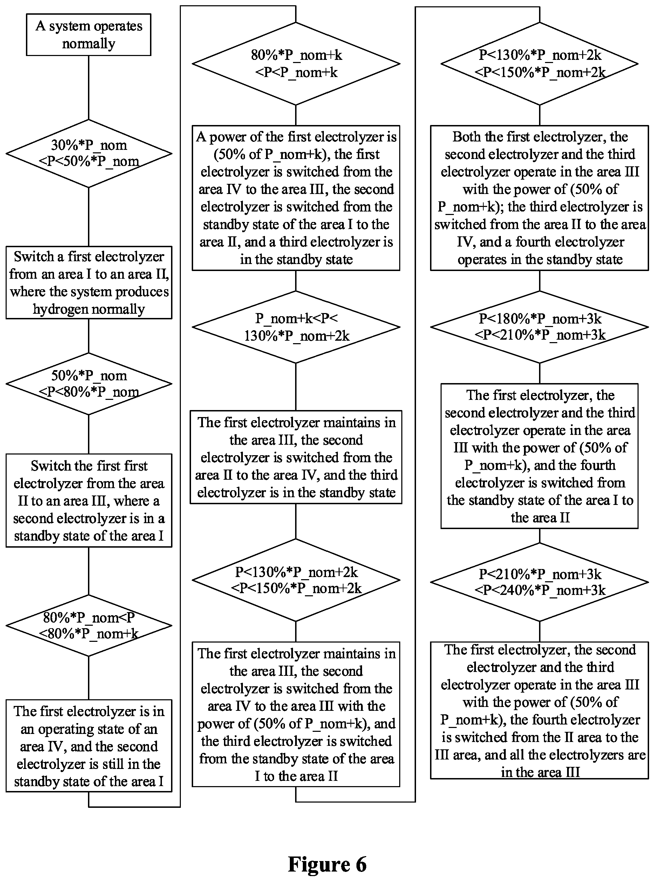

Taking the cases shown in Figure 2 and Figure 3 as an example, if the hydrogen production system from renewable energy is started, a control strategy for starting the hydrogen production system is shown in Figure 6.

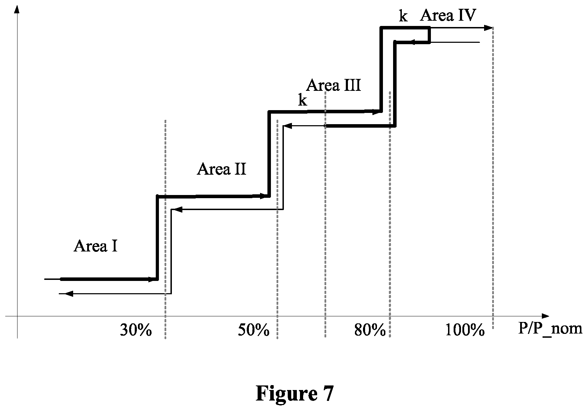

P_nom represents a rated power of the single electrolyzer. In a case that the power of the renewable energy input module (that is, the power of renewable energy) is greater than 30% of P_nom and less than 50% of P_nom, a first electrolyzer is switched from a standby state of the area I to the area II to produce hydrogen normally. In a case that the power of renewable energy is greater than 50% of P_nom and less than 80% of P_nom, the first electrolyzer is switched from the area I to the area III, and a second electrolyzer is switched to be in a standby state. In a case that the power of renewable energy is greater than 80% of P_nom and less than 80% of P_nom+k, the first electrolyzer is switched from the area I to the area IV, and the second electrolyzer is still operating in the standby state. Where, k represents a preset margin and is less than or equal to 20% of P_nom, depending on the actual situation. In a case that the power of renewable energy is greater than 80% of P_nom+k and less than 100% of P_nom+k, the operation range of the first electrolyzer is switched from the area IV to the area III, and the power of the first electrolyzer is 50*P_nom+k, and the second electrolyzer is switched from the standby state of the area I to the area II to produce hydrogen normally. The switching between operation ranges of each electrolyzer is shown in Figure 7. Hysteretic processing may be set in each switching to prevent jitter. The electrolyzers are switched to operate in the area III as much as possible. The above process is repeated until each electrolyzer operates in the area III, ensuring the optimal efficiency of the system. The control strategy if the hydrogen production system is stopped is the same as the above concept, in which the electrolyzers operate in the area III as much as possible, which is not repeated herein.

In an embodiment, in the control strategy if the hydrogen production system is stopped, the preset load-shedding power is determined as a switching condition, instead of determining a case that each electrolyzer fails to maintain in the operating state as the switching condition. Specifically, assuming that there are four electrolyzers, if the power of the renewable energy input module decreases to four times the preset load-shedding power, such as 4*40% of P_nom, one of the four electrolyzers is stopped, the other three electrolyzers operate to equally share the load, and each of the other three electrolyzers operates at 53.3% of P_nom, until only one electrolyzer operates. The electrolyzer is stopped based on a normal stopping process. For example, if hydrogen in oxygen or a power is less than a limit, and an electrolyzer is on standby or stopped.

In practice, if the overall power of the renewable energy fluctuates, the number of times of starting and stopping the electrolyzer is minimized in order to avoid a large change in the operation range of the single electrolyzer. In such case, a smooth power fluctuation is required. The control strategy is illustrated in Figure 5. Therefore, a fixed threshold Pn1 may be set instead of calculating the acceptable power fluctuation limit of the single electrolyzer with the strongest ability to withstand a power fluctuation in real time. In a case that the power fluctuation ΔP of the renewable energy exceeds the threshold Pn1, it is determined that the single electrolyzer fails to withstand the power fluctuation inputted to the system, where ΔP=|P(1)-P(t-1)|, P(t) represents a power of the renewable energy input module at a current time instant t, P(t-1) represents a power of the renewable energy input module at a previous time instant (t-1). In this case, it is determined that electrolyzers currently in the operating state share the power fluctuation, and the sharing may be performed in the equal distribution manner or in the weighted distribution manner. In a case that the power fluctuation ΔP of the renewable energy is less than or equal to the threshold Pn1, it is determined that the single electrolyzer can withstand the power fluctuation inputted to the system, and the power fluctuation is withstood by the single electrolyzer. The increased power is withstood by an electrolyzer operating in the low load range, and the decreased power is withstood by an electrolyzer operating in the high load range. The threshold Pn1 may be determined based on the power fluctuation limit of the electrolyzer, which is not limited herein.

In this embodiment, for the hydrogen production from renewable energy, especially in the large-scale hydrogen production system, multiple electrolyzers are started and stopped based on the principle of the optimal efficiency of the system, minimizing the number of times of starting and stopping the electrolyzer, and the smooth power fluctuation, so that the electrolyzer is more adapted to the power fluctuation of renewable energy, thereby producing hydrogen from renewable energy more efficiently.

According to the present disclosure, the same and similar parts of the embodiments may be referred to each other, and each embodiment focuses on differences from other embodiments. In particular, since the system or embodiments of the system are basically similar to embodiments of the method, the description thereof is relatively simple, and reference may be made to the relevant part of the embodiments of the method. The above-described system and the embodiments of the system are only schematic. A unit described as a discrete component may be or may not be physically separated. Components shown as units may be or may not be physical units, that is, the components may be located in one place or may be distributed onto multiple network units. Some or all modules thereof may be selected based on an actual requirement, to implement an objective of the solution in the embodiments. Those skilled in the art may understand and implement the present disclosure without any creative effort.

It should be further noted that the units and algorithm steps of the examples described in conjunction with the embodiments disclosed herein may be implemented by electronic hardware, computer software or a combination of the two. In order to clearly illustrate the interchangeability of the hardware and software, the compositions and steps of each example are generally described according to functions in the above description. Whether these functions are performed in hardware or software depends on the specific application and design constraints for the technical solution. Those skilled in the art may use different methods for each particular application to implement the described functions, but such implementation should not be considered as going beyond the scope of the present disclosure.

Based on the above description of the disclosed embodiments, features described in the embodiments in the present disclosure may be replaced or combined so that those skilled in the art can implement or use the present disclosure. Various modifications to the embodiments are apparent to those skilled in the art, and the general principle herein can be implemented in other embodiments without departing from the spirit or scope of the present disclosure. Therefore, the present disclosure should not be limited to the embodiments disclosed herein, but has the widest scope in accordance to the principle and the novel features disclosed herein.

## Claims

1. A hydrogen production system from renewable energy, comprising
a control system;
a renewable energy input module;
a power conversion module; and
at least two electrolyzers,
wherein the renewable energy input module is configured to supply power to each of the at least two electrolyzers through the power conversion module; and
the control system is configured to control, based on a power of the renewable energy input module, the power conversion module to operate, wherein at least N-1 of N electrolyzers in an operating state operate within a preset load range, N is a positive integer, and the preset load range is a load range corresponding to a highest efficiency of the hydrogen production system in a division result of an electrolyzer operation range pre-stored in the control system.

2. The hydrogen production system from renewable energy according to claim 1, wherein the control system is further configured to:
increase with a priority a power of an electrolyzer operating in a low load range if the power of the renewable energy input module increases; and
reduce with a priority a power of an electrolyzer operating in a high load range if the power of the renewable energy input module decreases.

3. The hydrogen production system from renewable energy according to claim 1, wherein the control system is further configured to:
control the at least two electrolyzers to share a power fluctuation of the renewable energy input module if the power fluctuation is greater than an acceptable power fluctuation limit of one of the at least two electrolyzers.

4. The hydrogen production system from renewable energy according to claim 3, wherein for controlling the at least two electrolyzers to share a power fluctuation, the control system is configured to:
control the electrolyzers in the operating state to share the power fluctuation in an equal distribution manner or in a weighted distribution manner.

5. The hydrogen production system from renewable energy according to any one of claims 1 to 4, wherein the division result of the electrolyzer operation range comprises at least two load ranges.

6. The hydrogen production system from renewable energy according to claim 5, wherein the at least two load ranges in the division result of the electrolyzer operation range comprises:
a first load range from 0% to 30% of a rated load;
a second load range from 30% to 50% of the rated load;
a third load range from 50% to 80% of the rated load; and
a fourth load range from 80% to 100% of the rated load;
wherein the third load range is the preset load range.

7. The hydrogen production system from renewable energy according to any one of claims 1 to 4, wherein the power conversion module comprises at least two power converters,
input terminals of the at least two power converters are connected to output terminals of the renewable energy input module in one-to-one correspondence; and
output terminals of the at least two power converters are connected to the at least two electrolyzers in one-to-one correspondence.

8. The hydrogen production system from renewable energy according to claim 7, wherein the control system comprises first controllers for the at least two power converters and second controllers for the at least two electrolyzers, wherein
the first controllers are communicatively connected to the second controllers in one-to-one correspondence; and
the first controllers are communicatively connected to each other, one of the first controllers serves as a communication master, and the communication master is configured to generate power commands for the at least two power converters and send the power commands to the respective first controllers.

9. The hydrogen production system from renewable energy according to claim 7, wherein the control system comprises a system controller, first controllers for the at least two power converters and second controllers for the at least two electrolyzers;
the first controllers are communicatively connected to the second controllers in one-to-one correspondence;
the first controllers are communicatively connected to the system controller; and
the system controller is configured to generate power commands for the at least two power converters and send the power commands to the respective first controllers.

10. A method for controlling a hydrogen production system from renewable energy, applied to the control system in the hydrogen production system from renewable energy according to any one of claims 1 to 9, wherein the method comprises:
gradually controlling the at least two electrolyzers to operate within the preset load range based on the power of the renewable energy input module in the hydrogen production system from renewable energy if the hydrogen production system from renewable energy is started, until the at least two electrolyzers are in the operating state; and
gradually reducing load ranges of the at least two electrolyzers based on the power of the renewable energy input module if the hydrogen production system from renewable energy is stopped, until the at least two electrolyzers are stopped.

11. The method for controlling the hydrogen production system from renewable energy according to claim 10, wherein the gradually controlling the at least two electrolyzers to operate within the preset load range comprises:
controlling a current electrolyzer to operate within the preset load range and controlling a next electrolyzer to follow a power fluctuation of the renewable energy input module, if the current electrolyzer fails to accommodate the power of the renewable energy input module as the power of the renewable energy input module increases.

12. The method for controlling the hydrogen production system from renewable energy according to claim 10, wherein the gradually reducing load ranges of the at least two electrolyzers until the at least two electrolyzers are stopped comprises:
controlling a current electrolyzer to be on standby and controlling a next electrolyzer to follow a power fluctuation of the renewable energy input module, if the current electrolyzer fails to maintain in the operating state as the power of the renewable energy input module decreases.

13. The method for controlling the hydrogen production system from renewable energy according to claim 10, wherein the gradually reducing load ranges of the at least two electrolyzers until the at least two electrolyzers are stopped comprises:
controlling one of the at least two electrolyzers to be on standby and controlling the other operating electrolyzers to share the power of the renewable energy input module if a power of each of the at least two electrolyzers equally distributed from the power of the renewable energy input module decreases to a preset load-shedding power as the power of the renewable energy input module decreases, until the at least two electrolyzers fail to maintain in the operating state.

14. The method for controlling the hydrogen production system from renewable energy according to any one of claims 10 to 13, further comprising:
determining whether a power fluctuation of the renewable energy input module is greater than an acceptable power fluctuation limit of the single electrolyzer if the power of the renewable energy input module fluctuates;
controlling at least two of the at least two electrolyzers to share the power fluctuation in a case that it is determined that the power fluctuation of the renewable energy input module is greater than the acceptable power fluctuation limit of the single electrolyzer; and
increasing with a priority a power of an electrolyzer operating in a low load range if the power of the renewable energy input module increases; and reducing with a priority a power of an electrolyzer operating in a high load range if the power of the renewable energy input module decreases, in a case that it is determined that the power fluctuation of the renewable energy input module is less than or equal to the acceptable power fluctuation limit of the single electrolyzer.
